# EUROPÄISCHE PATENTSCHRIFT

(11) **EP 1 243 757 B1**
(45) Veröffentlichungstag und Bekanntmachung des Hinweises auf die Patenterteilung: **07.12.2005**
(21) Anmeldenummer: 02009180.7
(22) Anmeldetag: 25.07.1997
(51) Int. Cl.: F01K 21/04, F01K 23/10, F02C 7/143

(54) **Verfahren zum Betrieb einer Kraftwerksanlage**
Process for operating a power plant
Procédé de fonctionnement d'une centrale d'énergie

(43) Veröffentlichungstag der Anmeldung: 25.09.2002
(62) Teilanmeldung aus: 97810532.8
(73) Patentinhaber: Alstom Technology Ltd, 5400 Baden (CH)
(72) Erfinder: Frutschi, Hans Ulrich, 5223 Riniken (CH)

(56) Entgegenhaltungen:
- EP-A- 0 081 996
- DE-A- 2 138 664
- DE-A- 3 815 993
- DE-A- 4 237 664
- FR-A- 2 230 864
- GB-A- 1 085 425

## Beschreibung

### Technisches Gebiet

Die vorliegende Erfindung betrifft ein Verfahren zum Betrieb einer Kraftwerksanlage gemäss Oberbegriff des unabhängigen Anspruchs.

### Stand der Technik

Moderne Gasturbogruppen in Kraftwerksanlagen werden mit hohem Druckverhältnis betrieben. Die aus einem hohen Verdichtungsverhältnis resultierenden hohen Luftaustrittstemperaturen aus dem Verdichter sind unerwünscht für den Betrieb der nachgeordneten Gasturbine. Daher wird der Verdichter vorzugsweise mit einer Zwischenkühlung betrieben.
Zur vorübergehenden oder dauerhaften Leistungssteigerung derartiger Gasturbogruppen ist es an sich bekannt, vor der Brennkammer der Gasturbine Wasser zuzugeben. Das verdampfende Wasser erhöht den Massendurchsatz und damit letztendlich die an den Generator abgegebene Leistung. Allerdings geht die Zugabe von kaltem Wasser mit einem empfindlichen Rückgang des Wirkungsgrads einher, da ja ein Teil des Brennstoffs für die Erwärmung und Verdampfung des Wassers verbraucht wird, was exergetisch ungünstig ist. Es wurde daher verschiedentlich vorgeschlagen, anstelle des kalten Wassers Heisswasser oder Dampf einzubringen.

Bei einer Kraftwerksanlage, welche aus einer Gasturbogruppe, einem nachgeschalteten Abhitzedampferzeuger und einem anschliessenden Dampfkreislauf besteht gemäss CH-480 535, wird zum Zwecke einer optimalen Abwärmenutzung der Gasturbogruppe im unteren Temperaturbereich des Abhitzedampferzeugers ein Massenstrom des Gasturbinenkreislaufmittels abgezweigt und in der Gasturbine rekuperativ genutzt. Sowohl der Gasturbinen- als auch der Dampfprozess weisen eine sequentielle Verbrennung auf. Diese Konfiguration führt aber im Falle von modernen, vorzugsweise einwellig ausgelegten Gasturbinen zu einer unerwünschten Komplikation in konstruktiver Hinsicht.

Bei einer weiteren Lösung zur Einspeisung von Dampf in die Gasturbine einer Gasturbinen/Dampfturbinen-Kombiantage gemäss GB 1085425 wird vorgeschlagen, im Misehvorwärmer mittels Abdampf der Dampfturbine vorgewärmtes Speisewassser zweistufig im Zwischenkühler des Verdichters und in einem Abgasrekuperator vorzuwärmen, in einem Verdampfer zu verdampfen, den Dampf zu überhitzen und anschliessend zwecks Entspannung in eine Dampfturbine einzuleiten. Der entspannte Dampf wird darauf hin in einem Teilstrom zum Mischvorwärmer zurückgeführt und in einem anderen Teilstrom entweder vor oder nach dem Überhitzer in die komprimierten Heissgase zur Gasturbine eingedüst.
In einer Weiterentwicklung dieser Lösung gemäss DE 2138664 wird der entspannte Dampf aus der Dampfturbine zum Zwecke der kalorischen Aufwertung vor der Vermischung mit den Heissgasen durch den Abgasstrom der Gasturbine zwischenüberhitzt.
Nach diesen Lösungen für einen Kombibetrieb geschieht die Dampferzeugung innerhalb der Brennkammer zur Heissgaserzeugung und damit zu Lasten der Heissgastemperatur. Dieses Konzept ist für moderne Gasturbinen nicht geeignet, da das Wasser durch Brennstoff vorgewärmt und verdampft werden muss, was exergetisch sehr ungünstig ist.

Für eine Gasturbine, welche nicht in Kombination mit einer Dampfturbine betrieben wird, ist EP 81996 die Anregung zu entnehmen, die über den Zwischenkühler der komprimierten Luft entnommene Wärmeenergie zur Vorwärmung und Verdampfung des der Gasturbine zuzuführenden Wassers zu nutzen. Zu diesem Zweck wird in die Kraftwerksanlage eine zusätzliche Austauschkolonne integriert, in welcher das im Zwischenkühler vorgewärmte Wasser in Stoff- und Wärmeaustausch mit einem Teilstrom der Verdichterluft tritt, wobei ein Teil des Wassers verdampft und in die Verdichterluft übertritt. Zur Erhöhung der Dampfmenge wird von dem nichtverdampften Wasser stromab der Kolonne ein Teilstrom abgezweigt und über einen zweiten Kreislauf in einem abgasbeheizten Wärmeübertrager erwärmt und wieder in die Kolonne zurückgeführt. Diese Lösung zielt auf einen maximalen Wirkungsgrad der Gesamtanlage durch Ausnutzung aller verfügbaren Wärmequellen innerhalb der Anlage hin. Sie ist apparate- und regelungstechnisch dementsprechend aufwendig.

Eine apparatetechnisch weniger aufwendige Anlage, die auf die Anordnung der Austauschkolonne und des zweiten Wasserkreislaufs verzichten kann, offenbart DE 4237664. Der Zwischenkühler wird in einem Kreislauf mit wenigstens zwei Ausdampfgefässen betrieben. In der Kaskade von Ausdampfgefässen wird Dampf unterschiedlichen Drucks erzeugt, der der - in diesem Falle zweistufigen - Gasturbine an unterschiedlichen Stellen zugeführt wird. Diese Lösung ist in erster Linie auf den Betrieb einer Gasturbine mit sequentieller Verbrennung ausgerichtet. Die erzeugten Sattdampfmengen unterschiedlichen Druckniveaus werden an unterschiedlichen Stellen in die Hochdruck- bzw. Niederdruckstufe der Gasturbine eingespeist. Die Variationsmöglichkeiten der Dampfzufuhr zwischen den einzelnen Druckstufen sind jedoch begrenzt, da Dampf auf höherem Druckniveau nur beschränkt zu Verfügung steht.

### Darstellung der Erfindung

Hier will die Erfindung Abhilfe schaffen. Der Erfindung, wie sie in den Ansprüchen gekennzeichnet ist, liegt die Aufgabe zugrunde, ein Verfahren der in DE 4237664 genannten Art im Hinblick auf eine effizientere Dampfbereitstellung weiterzuentwickeln.

Dies wird erfindungsgemäss dadurch erreicht, dass aus dem Kreislauf stromauf der Kaskade von Ausdampfgefässen ein Teilstrom des Kreislaufmediums Wasser abgezweigt wird, dieser Teilstrom vor Einleitung in die Gasturbogruppe über einen mit einer Teilmenge der Abgase aus der Gasturbogruppe durchströmten Wärmeübertrager geleitet und anschliessend der Gasturbogruppe an geeigneter Stelle, vorzugsweise stromauf der Brennkammern, zugeführt wird. Zum Ausgleich der Wasserverluste wird stromauf des Zwischenkühlers Zusatzwasser in den Kreislauf eingeleitet.

Indem nunmehr Hochdruck-Heisswasser aus einem abgezweigten Teilstrom des Kreislaufwassers in die Gasturbogruppe eingespeist wird, kann die Ausdampfkaskade in dem Kreislauf wirksam als eine Wärmesenke zur Kühlung des Kreislaufwassers unabhängig vom Dampfbedarf der Gasturbogruppe eingesetzt werden.

Vorteilhafte und zweckmässige Weiterbildungen der erfindungsgemässen Aufgabenlösung sind in den weiteren Ansprüchen gekennzeichnet.

Im folgenden werden anhand der Zeichnungen Ausführungsbeispiele der Erfindung näher erläutert. Alle für das unmittelbare Verständnis der Erfindung nicht erforderlichen Elemente sind fortgelassen worden. Die Strömungsrichtung der Medien ist mit Pfeilen angegeben. Gleiche Elemente sind in den verschiedenen Figuren mit den gleichen Bezugszeichen versehen.

### Kurze Beschreibung der Zeichnungen

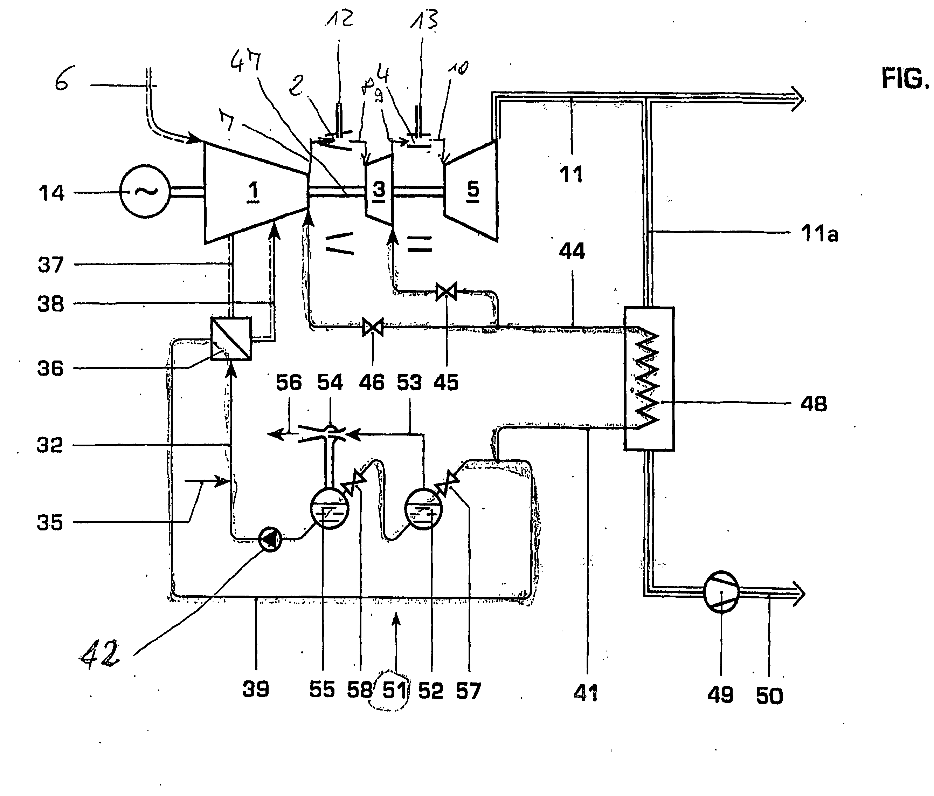

Es zeigt:
die Figur eine Schaltung einer Kraftwerksanlage mit einer Gasturbogruppe.

### Wege zur Ausführung der Erfindung, gewerbliche Verwertbarkeit

Die Fig. zeigt eine Gasturbogruppe einer Kraftwerksanlage mit nachgeschaltetem Wärmeübertrager 48 zur kalorischen Verwertung wenigstens eines Teils der heissen Abgase 11.
Die vorliegende Gasturbogruppe ist auf einer sequentiellen Verbrennung aufgebaut. Sie besteht aus einem Verdichter 1, einer dem Verdichter nachgeschalteten ersten Brennkammer 2, einer dieser Brennkammer 2 nachgeschalteten ersten Turbine 3, einer dieser Turbine 3 nachgeschalteten zweiten Brennkammer 4 und einer dieser Brennkammer 4 nachgeschalteten zweiten Turbine 5. Der Verdichter 1 ist mit einem Zwischenkühler 36 ausgerüstet, in welchem ein vorgewärmetes Kondensat 32 als Kühlmittel dient und zu Heisswasser 39 aufgeheizt wird. Die genannten Strömungsmaschinen 1, 3, 5 weisen eine einheitliche Rotorwelle 47 auf. Diese Rotorwelle 47 ist vorzugsweise auf zwei in der Figur nicht näher ersichtlichen Lagern gelagert, welche vorzugsweise kopfseitig des Verdichters 1 und stromab der zweiten Turbine 5 plaziert sind. Auf die Zwischenkühlung wird weiter unten näher eingegangen. Die angesaugte Luft 6 wird im Verdichter 1 komprimiert und strömt dann als verdichtete Luft 7 in ein nicht näher gezeigtes Gehäuse. In diesem Gehäuse ist auch die erste Brennkammer 2 untergebracht, welche vorzugsweise als zusammenhängende Ringbrennkammer ausgebildet ist. Selbsverständlich kann die verdichtete Luft 7 zur ersten Brennkammer 2 aus einer nicht gezeigten Luftspeicheranlage beigestellt werden. Die Ringbrennkammer 2 weist kopfseitig, auf den Umfang verteilt, eine Anzahl von nicht näher gezeigten Brennern auf, welche vorzugsweise als Vormischbrenner ausgelegt sind. An sich können hier auch Diffusionsbrenner zum Einsatz gelangen. Im Sinne einer Reduzierung der Schadstoff-Emissionen aus dieser Verbrennung, insbesondere was die NOx-Emissionen betrifft, ist es indessen vorteilhaft, eine Anordnung von Vormischbrennem gemäss EP-PS-0 321 809 vorzusehen. Die Heissgase 8 aus dieser Ringbrennkammer 2 beaufschlagen die unmittelbar nachgeschaltete erste Turbine 3, deren kalorisch entspannende Wirkung auf die Heissgase bewusst minimal gehalten wird, d.h. diese Turbine 3 wird demnach aus nicht mehr als zwei Laufschaufelreihen bestehen. Die in der Turbine 3 teilentspannten Heissgase 9, welche unmittelbar in die zweite Brennkammer 4 strömen, weisen aus dargelegten Gründen eine recht hohe Temperatur auf, vorzugsweise ist sie betriebsspezifisch so auszulegen, dass sie sicher noch um 1000°C beträgt. Diese zweite Brennkammer 4 hat im wesentlichen die Form eines zusammenhängenden ringförmigen axialen oder quasi-axialen Ringzylinders. Diese Brennkammer 4 weist keinen Brenner auf: Die Verbrennung eines in die aus der Turbine 3 kommenden teilentspannten Heissgase 9 eingedüsten Brennstoffes 13 geschieht hier durch Selbstzündung, soweit freilich das Temperaturniveau eine solche Betriebsart zulässt. Ausgehend davon, dass die Brennkammer 4 mit einem gasförmigen Brennstoff, also beispielsweise Erdgas, betrieben wird, muss die Austrittstemperatur der teilentspannten Heissgase 9 aus der Turbine 3 noch sehr hoch sein, wie oben dargelegt um die 1000°C, und dies selbstverständlich auch bei Teillastbetrieb, was auf die Auslegung dieser Turbine 2 eine ursächliche Rolle spielt. Um die Betriebssicherheit und einen hohen Wirkungsgrad bei einer auf Selbstzündung ausgelegten Brennkammer zu gewährleisten, ist es eminent wichtig, dass die Flammenfront ortsmässig stabil bleibt. Die in der Brennkammer 4 aufbereiteten Heissgase 10 beaufschlagen anschliessend eine nachgeschaltete zweite Turbine 5. Die Leistungsabgabe der Strömungsmaschinen geschieht über einen verdichterseitig angekoppelten Generator 14, der auch als Anwurfmotor dienen kann. Nach Entspannung in der Turbine 5 durchströmt wenigstens ein Teil der noch mit einem hohen kalorischen Potential versehenen Abgase 11 vor Entlassung in die Atmosphäre einen Wärmeübertrager 48 für die Erwärmung des Hochdruck-Heisswassers 39 aus dem Zwischenkühler 36. Da in diesem Fall meistens nur ein Teil 41 des Heisswassers 39 im Wärmeübertrager 48 erwärmt werden muss, wird dieser vorzugsweise in einen Nebenstrom 11 a der Abgasleitung 11 gelegt, und die zur Vorwärmung benötigte Abgasmenge 11a über ein Saugzuggebläse 49 gefördert und geregelt. Die Rauchgase 50 strömen dann weiter. Dadurch muss nicht der ganze Abgasstrom 11 gestaut werden, was exergetisch ungünstig wäre. Weil nur ein Teil der Heisswassermenge 39 über die Leitung 44 in die Gasturbine eingeleitet wird, muss der überschüssige Teil einer Wärmesenke 51 oder sonstiger Verwertung zugeführt werden. Eine Wärmesenke 51 besteht hier darin, dass eine Ausflashkaskade 51 vorgesehen wird. Ihre Funktionsweise ist so, dass in einer ersten Flasche 52 ein Ueberdruckdampf 53 erzeugt wird, welcher über einen Ejektor 54 eine zweite Flasche 55 evakuiert, in welcher das dort befindliche Wasser unter 100°C gebracht wird, so dass sich zusammen mit dem Zusatzwasser 35 das Kühlwasser 32 ergibt. Durch das Zusatzwasser 35 muss nicht nur die in die Gasturbine eingespritzte Dampfmenge 44, sondern auch das mit dem Abdampf 56 des Ejektors 54 verlassende Wasser ersetzt werden. Regelorgane 57, 58 sorgen für den Betrieb der Flaschen 52, 55.

### Bezugszeichenliste

- 1: Verdichter
- 2: Erste Brennkammer
- 3: Erste Turbine
- 4: Zweite Brennkammer
- 5: Zweite Turbine
- 6: Ansaugluft
- 7: Verdichtete Luft
- 8: Heissgase
- 9: Teilenspannte Heissgase
- 10: Heissgase
- 11, 11a: Abgase
- 12: Brennstoff
- 13: Brennstoff
- 14: Generator
- 32: Kondensat
- 35: Zusatzwasser
- 36: Zwischenkühler
- 37: Teilverdichtete Luft
- 38: Gekühlt, teilverdichtete Luft
- 39: Hochdruck-Heisswasser
- 41: Heisswasser
- 42: Förderpumpe
- 44: Einspritzwasser
- 45, 46: Regelorgane
- 47, 47a: Rotorwelle
- 48: Wärmeübertrager
- 49: Saugzuggebläse
- 50: Rauchgase
- 51: Ausflashkaskade, Wärmesenke
- 52: Erste Flasche
- 53: Ueberdruckdampf
- 54: Ejektor
- 55: Zweite Flasche
- 56: Abdampf des Ejektors 54
- 57, 58: Drosselorgane

## Patentansprüche

1. Verfahren zum Betrieb einer Kraftwerksanlage mit einer Gasturbogruppe, welche aus mindestens einer Verdichtereinheit (1) mit einem Zwischenkühler (36), mindestens einer Brennkammer (2, 4), mindestens einer Turbine (3, 5) und mindestens einem Generator (14) oder einer Last besteht, wobei der Zwischenkühler (36) über ein Kreislaufmedium (32, 39) in Wirkverbindung mit eirier Wärmesenke (51) steht, dergestalt, dass das aus der Wärmesenke (51) stammende Kondensat (32) in dem Zwischenkühler (36) zu einem heissen Medium (39) aufbereitet und danach in einem Kreislauf wieder zu der Wärmesenke (51) zurückgeführt wird, **dadurch gekennzeichnet, dass** ein Teilstrom (41) des heissen Mediums (39) stromauf der Wärmesenke (51) abgezweigt, über einen mit einer Teilmenge der Abgase (11a) aus der Gasturbogruppe durchströmten Wärmeübertrager (48) geleitet und anschliessend über eine Leitung (44) in die Gasturbogruppe eingeleitet wird, während stromauf des Zwischenkühlers (36) ein Zusatzwasser (35) in das Kondensat (32) eingespeist wird.

2. Verfahren nach Anspruch 1, **dadurch gekennzeichnet, dass** das Medium (39) ein Heisswasser ist.

3. Verfahren nach Anspruch 1, **dadurch gekennzeichnet, dass** sich das Medium (39) aus einem Heisswasser/Dampf-Gemisch zusammensetzt.

4. Verfahren nach Anspruch 1, **dadurch gekennzeichnet, dass** das Medium (39) stromauf einer Brennkammer (2, 4) und/oder in diese eingebracht wird.

## Claims

1. Process for operating a power plant comprising a gas turboset which consists of at least one compressor unit (1) having an intercooler (36), at least one combustion chamber (2, 4), at least one turbine (3, 5) and at least one generator (14) or a load, the intercooler (36) being in operative connection with a heat sink (51) via a circulation medium (32, 39) in such a way that the condensate (32) originating from the heat sink (51) is turned into a hot medium (39) in the intercooler (36) and is fed back again in a circuit to the heat sink (51), **characterized in that** a partial flow (41) of the hot medium (39) is branched off upstream of the heat sink (51), is directed via a heat exchanger (48) through which a partial quantity of the exhaust gases (11a) from the gas turboset flows, and is then directed via a line (44) into the gas turboset, whereas make-up water (35) is fed into the condensate (32) upstream of the intercooler (36).

2. Process according to Claim 1, **characterized in that** the medium (39) is hot water.

3. Process according to Claim 1, **characterized in that** the medium (39) is composed of a hot-water/steam mixture.

4. Process according to Claim 1, **characterized in that** the medium (39) is introduced upstream of a combustion chamber (2, 4) and/or into the latter.

## Revendications

1. Procédé de fonctionnement d'une centrale d'énergie comprenant un groupe générateur à turbine à gaz, qui se compose d'au moins une unité de compresseur (1) avec un refroidisseur intermédiaire (36), d'au moins une chambre de combustion (2, 4), d'au moins une turbine (3, 5) et d'au moins un générateur (14) ou d'une charge, le refroidisseur intermédiaire (36) étant en liaison coopérante avec un dissipateur de chaleur (51) par le biais d'un fluide en circulation (32, 39), de telle sorte que le condensat (32) provenant du dissipateur de chaleur (51) soit préparé dans le refroidisseur intermédiaire (36) en vue de produire un fluide chaud (39) et soit ensuite ramené dans un circuit jusqu'au dissipateur de chaleur (51), **caractérisé en ce qu'**un courant partiel (41) du fluide chaud (39) est dérivé en amont du dissipateur de chaleur (51), est guidé par le biais d'un échangeur de chaleur (48) parcouru par une quantité partielle de gaz d'échappement (11a) provenant du groupe générateur à turbine à gaz et soit ensuite introduit par une conduite (44) dans le groupe générateur à turbine à gaz, tandis qu'en amont du refroidisseur intermédiaire (36) de l'eau supplémentaire (35) est introduite dans le condensat (32).

2. Procédé selon la revendication 1, **caractérisé en ce que** le fluide (39) est de l'eau chaude.

3. Procédé selon la revendication 1, **caractérisé en ce que** le fluide (39) se compose d'un mélange d'eau chaude et de vapeur.

4. Procédé selon la revendication 1, **caractérisé en ce que** le fluide (39) est introduit en amont d'une chambre de combustion (2, 4) et/ou dans celle-ci.
